**Europäisches Patentamt**

(19) **European Patent Office**

**Office européen des brevets**

(11) Numéro de publication: **0 069 136 B1**

(12) **FASCICULE DE BREVET EUROPEEN**

(45) Date de publication du fascicule du brevet:
**17.04.85**

(51) Int. Cl.⁴: **E 02 D 17/18**, C 02 F 1/52

(21) Numéro de dépôt· **82900249.2**

(22) Date de dépôt: **12.01.82**

(86) Numero de dépôt international:
**PCT/FR 82/00004**

(87) Numéro de publication internationale:
**WO 82/02415 (22.07.82 Gazette 82/18)**

(54) **INSTALLATION D'EPANDAGE DE BOUES ARGILEUSES POUR LA REHABILITATION DES SOLS.**

(30) Priorité: **13.01.81 US 224761**

(43) Date de publication de la demande:
**12.01.83 Bulletin 83/2**

(45) Mention de la délivrance du brevet:
**17.04.85 Bulletin 85/16**

(84) Etats contractants désignés:
**BE DE FR GB LU SE**

(56) Documents cités:
**FR - A - 2 184 411**
**US - A - 3 680 698**
**US - A - 4 008 146**

(73) Titulaire: **ALSTHOM-ATLANTIQUE Société anonyme dite:, 38, Avenue Kléber, F-75784 Paris Cédex 16 (FR)**

(72) Inventeur: **CONDOLIOS, Elle, 6, rue Aristide Bergès, F-38000 Grenoble (FR)**
Inventeur: **COURATIN, Pierre, 40, avenue La Bruyère, F-38100 Grenoble (FR)**

(74) Mandataire: **Weinmiller, Jürgen et al, Zeppelinstrasse 63, D-8000 München 80 (DE)**

## Description

La présente invention concerne une installation d'épandage de boues argileuses.

Elle s'applique, entre autres, aux mines de phosphate de Floride qui retirent de »mine cuts« un minerai séparé en laverie en 3 composants: un concentrée de phosphate, un sable siliceux, des argiles (montmorionites et attapulgites). Ces dernières sont restituées dispersées dans l'eau à une concentration très faible voisine de 4%.

Couramment une laverie délivre 2 000 000 de tonnes d'argile par an contenues dans 50 000 000 de m³ d'eau argileuse.

Ces débits considérables sont déversés dans des bassins de plusieurs km² où une décantation naturelle se produit. Les bassins sont construits à l'aide de digues s'élevant à 15 m environ au-dessus du sol original. Ils sont peu à peu abandonnés pleins d'une boue visqueuse à 25% de concentration.

Le document US-A-3 680 698 décrit une installation d'épandage de boues argileuses sur un champs hors d'eau préparé par la mise en place d'un fond filtrant au-dessus du niveau de la nappe phréatique, comportant un bassin de décantation, dans lequel de l'eau boueuse additionnée d'un agent de floculation est envoyée, une pompe d'extraction des boues extrayant les boues épaissies par le bassin de décantation et les poussant dans une conduite qui les dirige jusqu'au point de déversement au-dessus du champs d'épandage.

Dans cette installation connue, l'adjonction du floculant est effectuée en amont d'un décanteur dans lequel tourne un agitateur. Or, il a été constaté que la quantité de floculant à mettre en œuvre pour obtenir une coagulation notable était élevée lorsque l'adjonction avait lieu en amont d'un organe mécanique d'agitation.

Il est un but de l'invention de proposer une installation d'épandage procurant, par rapport à l'installation connue, une économie d'agent floculant et une simplification de l'installation.

Il est à noter qu'on aconnaît, par le document FR-A-2 184 411 un procédé de décantation prévoyant l'adjonction d'un floculant en plusieurs endroits en amont du décanteur. On connaît aussi par le document US-A-4 008 146 un procédé d'épandage d'eaux sableuses, sans qu'on prévoie l'adjonction d'un floculant.

L'invention a donc pour objet une installation d'épandage de boues argileuses sur un champs hors d'eau préparé par la mise en place d'un fond filtrant au-dessus du niveau de la nappe phréatique, comportant un bassin de décantation, dans lequel de l'eau boueuse additionnée d'un agent de floculation est envoyée, une pompe d'extraction des boues extrayant les boues épaissies par le bassin de décantation et les poussant dans une conduite qui les dirige jusqu'au point de déversement au-dessus du champs d'épandage, caractérisée en ce qu'un nouvel ajout d'agent de floculation est effectué en un lieu qui est un voisinage du point de déversement et qui n'est séparé du point de déversement par aucun organe mécanique.

Dans une réalisation préférée de l'invention, le nouvel ajout d'agent de floculation est réalisé en deux points distants l'un de l'autre de quelques mètres à quelques centaines de mètres, au premier point, celui situé le plus en amont, le floculant est injecté dans la conduite très fortement diluée avec une partie de l'eau libérée au moment de l'épandage et que l'on recircule dans la conduite, et au second point le plus en aval, à proximité immédiate de la sortie, le floculant est injecté dilué ou non.

Selon une réalisation préférée, la zone d'épandage est comprise entre au moins une digue amont et une digue aval, la digue aval au moins étant poreuse, la digue amont constituant ledit point haut et comportant une conduite munie d'une pluralité de point de rejet successifs, ledit champ d'épandage présentant en outre une légère déclivité parallèlement auxdites digues.

Dans la présente description et les revendications il faut entendre par le mot digue soit des digues réalisées spécialement, soit des digues produites par les matériaux de déblai de l'exploitation (»mine cuts«). C'est en particulier le cas dans les mines de phosphate de Floride.

D'autres avantages et caractéristiques de l'invention ressortiront de la description d'un exemple de réalisation préférée de l'invention faite ci-après en regard du dessin annixé dans lequel:

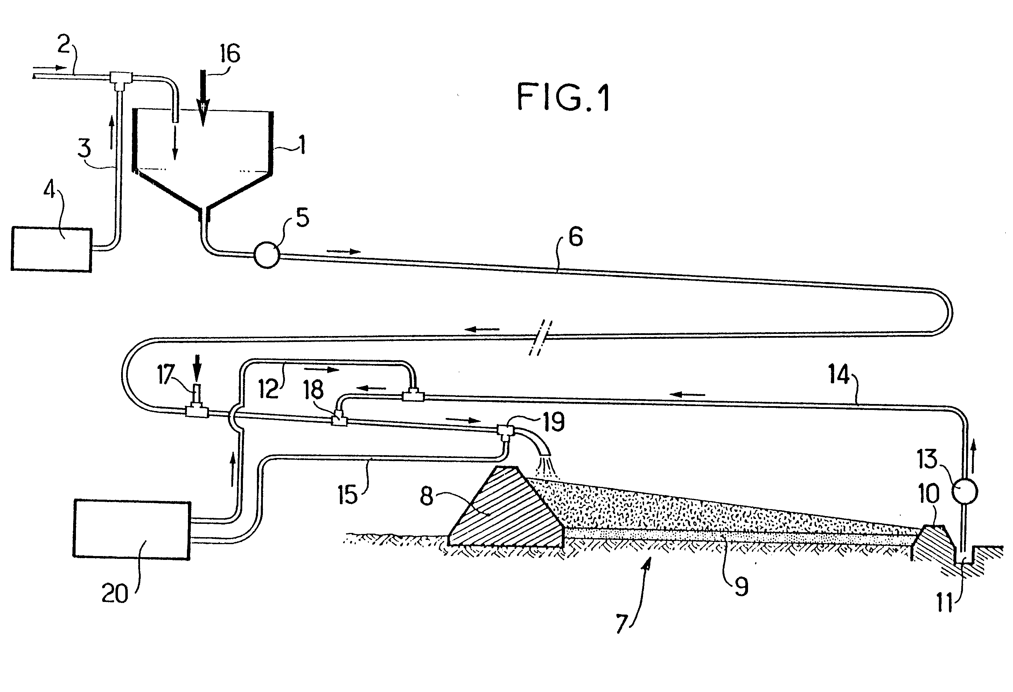

La figure 1 montre une installation d'épandage selon l'invention.

La figure 2 représente vue de dessus un exemple particulier d'un aménagement d'un champ d'épandage applicable par exemple à la Floride.

La figure 3 est une soupe selon III-III de la figure 2.

La figure 4 est une coupe selon IV-IV de la figure 2.

L'installation comprend un décanteur-clarificateur 1. L'eau boueuse provenant d'une laverie dans laquelle le minerai de phosphate a été traité est envoyée dans le décanteur 1 par une conduite 2. Cette eau contient de l'argile restituée par la laverie à une concentration moyenne de 4%. Un agent floculant, un polyacrylamide par exemple, est introduit dans l'eau boueuse par une conduite 3 provenant d'une réserve 4 juste avant son entrée dans le décanteur. La quantité de floculant injectée est par exemple de 350 grammes par tonne de boue sèche.

Une pompe 5 extrait la boue épaissie à la base du décanteur 1 qui est alors à une concentration de 10 à 13% et la pousse dans une conduite 6 qui aboutit au champ d'épandage 7. Le champ d'épandage 7 est préparé à l'avance. Il doit être hors d'eau et le fond doit être filtrant au dessus du niveau de la nappe d'eau phréatique. On peut utiliser comme champ d'épandage le lieu de l'extraction, il faut alors mettre hors d'eau la zone d'épandage, soit par remblai avec le terrain de la découverte plus du sable de flottation, soit par rabattement de la nappe phréatique au moyen d'un pompage. Dans tous les cas, il faut mettre en place un fond filtrant au dessus du niveau de la nappe d'eau. Le sable de flottation est spécialement recommandé pour cet usage. L'épaisseur de la couche est par exemple de 1 m. Un talus 8 est formé de 15 à 20 m par exemple pour réaliser le point haut du déversement, en 9, on voit la zone filtrante en sable par exemple. Avant l'épandage, le sol peut avoir une pente de 1% ou moins. Une digue basse 10 filtrante est placée à l'extreémité du champ, à 200 m par exemple et suivie d'un caniveau 11 d'évacuation des eaux.

Le champ d'épandage peut être soit rectangulaire soit circulaire, dans ce dernier cas, un pylône central supporte la conduite d'arrivée 6 des boues.

Au voisinage de l'extrémités de sortie de la conduite 6, on réalise, par surfloculation, la restructuration mécanique des flocons cassés au cours du transport. Pour cela, à quelques dizaines de mètres de l'extrémité, on ajoute par un dispositif 18 une première dose d'agent floculant arrivant par une conduite 12 d'une réserve 20 que l'on dilue avec de l'eau libérée au cours de l'épandage et que l'on récolte dans le caniveau 11 par une pompe 13 et une conduite 14; une seconde dose d'agent floculant arrivant par une conduite 15 est injectée par un dispositif 19 proche de l'extrémité de la conduite 6.

La première dose d'agent floculant peut être introduite jusqu'à quelques centaines de mètres de l'extrémité.

Cette manière d'opérer assure un bon mélange du floculant et de la boue préconcentrée et elle permet d'économiser le floculant nécessaire à la déshydratation finale.

On peut aussi, afin d'améliorer la qualité du sol réalisé par l'épandage, ajouter du sable. Cela peut par exemple se faire en deux points de l'installation: au niveau du décanteur 1 où cela a été figuré par la flèche 16 et au niveau de la fin de la conduite en 17, avant l'apport de la première dose diluée de floculant.

L'épandage se fait alors naturellement en prenant une pente de l'ordre de 10%. Cette pente permet un lent écoulement des boues et une évacuation aisée de l'eau libérée grâce à la surfloculation. Cette eau qui s'écoule grâce à la pente s'élimine aisément dans la nappe phréatique. Au bout d'un temps relativement court, on obtient un sol dans lequel il y a 30% de parties solides et où la surface est craquelée facilitant l'évaporation. Au bout de quelques mois, le sol est consolidé.

La distance entre les dispositifs 18 et 19 séparant l'injection de la première dose, de l'injection de la seconde dose de floculant est de préférence au moins égal à 10 m et les mélanges peuvent être améliorés par la présence d'un ou de plusieurs coudes placés entre les deux dispositifs 18 et 19. La quantité de floculant ajouté pour la surfloculation aux points 18 et 19 est environ de 650 grammes par tonne de boue sèche ce qui porte le poids total de floculant pour les argiles de Floride à 650 + 350 soit à 1 kg par tonne. A titre d'exemple, on peut dire que le débit d'eau recirculée dans la conduite 14 est d'environ 40% de celui du débit de la conduite 6.

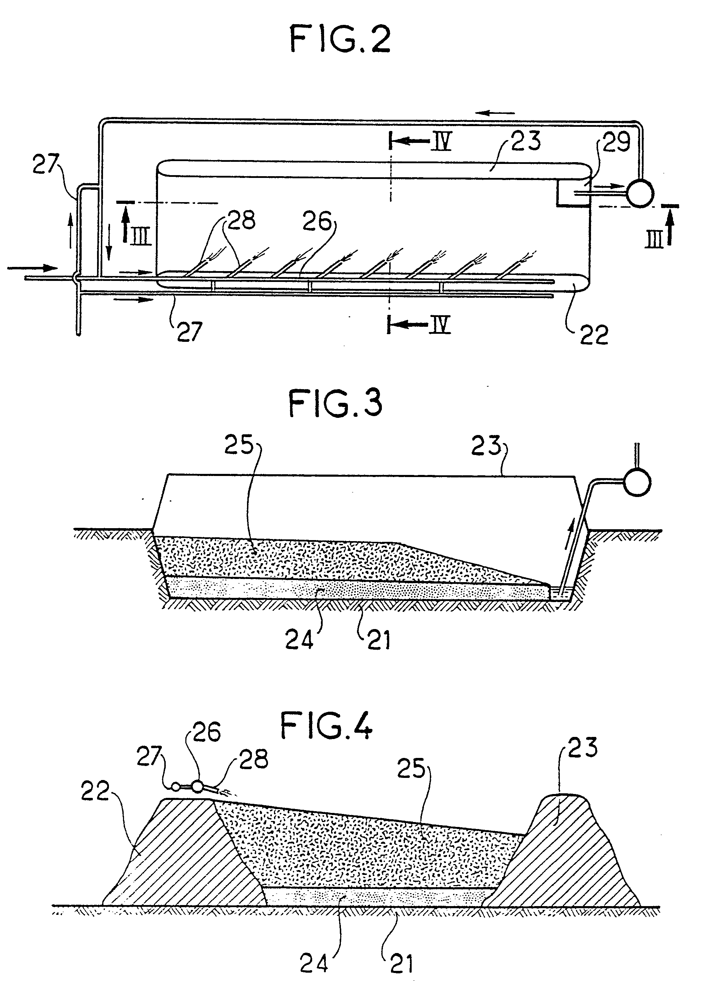

En se reportant aux figures 2, 3 et 4, on va décrire un champ d'épandage dans lequel on se propose de rejeter la boue à consolider dans la cavité laissée par la mine exploitée à ciel ouvert par excavateur.

Il est constitué au fond par le sol original 21 qui était directement sous la couche phosphatée extraite, sol généralement situé sous la nappe phréatique. Chaque mine est limitée par deux rangées de collines 22, 23 construites avec le terrain sablonneux qui était situé au-dessus de la couche phosphatée avant exploitation. En ajoutant selon l'invention une couche de sable 24 sortant de la laverie ou de ce terrain sablonneux on obtient un champ d'épandage tel que celui nécessaire avec un fond perméable au-dessus de la nappe phréatique entre deux rangées de digues elle-même poreuse formées par les collines 22 et 23. La boue épandue est représentée en 25.

La colline 22 est nivellée et comporte un réseau de conduite de boue 26 et de floculant 27. D'une colline 22 à l'autre 23, la boue prend une pente naturelle d'environ 10%.

On répartit sur la colline 22 une série de points de rejet successifs 28 pour que la surface de rejet, en coupe longitudinale présente une pente beaucoup plus faible de l'ordre de 1%. Le point de pompage 29 de l'eau à recirculer est situé à l'aval de la mine. Il reçoit une partie de son eau par ruissellement de surface sur le dépôt de boue et une autre partie par infiltration dans la nappe phréatique.

**Revendications**

1. Installation d'épandage de boues argileuses sur un champs hors d'eau (7) préparé par la mise en place d'un fond filtrant (9) au-dessus du niveau de la nappe phréatique, comportant un bassin de décantation (1), dans lequel de l'eau boueuse additionnée d'un agent de floculation est envoyée, une pompe d'extraction des boues (5) extrayant les boues épaissies par le bassin de décantation et les poussant dans une conduite (6) qui les dirige jusqu'au point de déversement au-dessus du champs d'épandage, caractérisée en ce qu'un nouvel ajout d'agent de floculation est effectué en un lieu qui est un voisinage du point de déversement et qui n'est séparé du point de déversement par aucun organe mécanique.

2. Installation selon la revendication 1, caractérisée en ce que ledit nouvel ajout d'agent de floculation est réalisé en deux points distants l'un de l'autre de quelques mètres à quelques centaines de mètres, le floculant étant injecté au premier point (18), celui le plus en amont, sous forme diluée avec une partie de l'eau libérée au moment de l'épandage.

3. Installation selon la revendication 2, caractérisée en ce que le champs d'épandage est compris entre au moins une digue amont (8) et une digue aval (10), la digue aval au moins étant poreuse, la digue amont étant à proximité du point de déversement et portant une conduite (26) munie d'une pluralité de points de rejet successifs (28).

## Patentansprüche

1. Anlage zum Ausbreiten von Tonschlamm auf ein wasserfreies Feld (7), das durch das Anbringen eines Filterbodens (9) oberhalb des Grundwasserspiegels vorbereitet wurde, mit einem Absetzbecken (1), in das mit einem Flockenbildner versetztes, schlammhaltiges Wasser eingebracht wird, wobei eine Schlammförderpumpe (5) den im Absetzbecken eingedickten Schlamm entnimmt und in eine Leitung (6) drückt, die ihn bis zur Ausgießstelle oberhalb des Feldes leitet, dadurch gekennzeichnet, daß erneut ein Flokkenbildner an einer Stelle zugesetzt wird, die sich in der Nähe der Ausgießstelle befindet und die durch kein mechanisches Organ von dieser Ausgießstelle getrennt ist.

2. Anlage nach Anspruch 1, dadurch gekennzeichnet, daß das neuerliche Zusetzen von Flokkenbildner an zwei voneinander um eine Strecke von zwischen einigen Metern und einigen hundert Metern entfernten Punkten durchgeführt wird, wobei der Flockenbildner am ersten Punkt (18), der am weitesten stromaufwärts liegt, in mit einem Teil des im Moment des Ausbreitens des Schlamms freiwerdenden Wassers verdünnter Form eingespritzt wird.

3. Anlage nach Anspruch 2, dadurch gekennzeichnet, daß das Feld von mindestens einem vorderen (8) und einem hinteren Deich (10) begrenzt wird, wobei zumindest der hintere Deich porös ist und der vordere Deich sich in der Nähe der Ausgießstelle befindet und eine Leitung (26) mit einer Vielzahl von aufeinanderfolgenden Ausgießöffnungen (28) trägt.

## Claims

1. An installation for spreading clayey mud on an area (7) which is free from water and which is prepared to receive the mud by laying a filtering layer (9) above the level of ground water, said installation comprising a decanting tank (1) which is fed by a mixture of mud and flocculating agent, a mud extraction pump (5) for extracting the mud which has been thickened in the decanting tank, and for pushing it into a pipe (6) which conveys it up to the pouring point located above said prepared area, characterized in that another addition of flocculating agent is effected at a point which is close to the pouring point and which is not separated from the pouring point by any mechanical element.

2. An installation according to claim 1, characterized in that said addition of flocculating agent is effected at two points which are spaced from each other between some meters and some hundred meters, the flocculating agent being injected at the first point (18), which is more upstream, in a diluted form by adding part of the water drained off from the spread mud during the spreading step.

3. An installation according to claim 2, characterized in that the spreading area lies between at least one upstream embankment (8) and one downstream embankment (10), at least the downstream embankment being porous, the upstream embankment being close to the pouring point and bearing a pipe (26) provided with a plurality of successive discharge points (28).

FIG.1

0 069 136

# FIG.2

# FIG.3

# FIG.4